(19) **Europäisches Patentamt / European Patent Office / Office européen des brevets**

(11) **EP 1 466 158 B1**

(12) **FASCICULE DE BREVET EUROPEEN**

(45) Date de publication et mention
de la délivrance du brevet:
**28.07.2010 Bulletin 2010/30**

(21) Numéro de dépôt: **03729275.2**

(22) Date de dépôt: **13.01.2003**

(51) Int Cl.:
**G01N 7/14** *(2006.01)*

(86) Numéro de dépôt international:
**PCT/FR2003/000086**

(87) Numéro de publication internationale:
**WO 2003/058209 (17.07.2003 Gazette 2003/29)**

(54) **APPAREILLAGE ET PROCEDE DE MESURE DE PRESSION DE VAPEUR**

VORRICHTUNG UND VERFAHREN ZUR DAMPFDRUCKMESSUNG

DEVICE AND METHOD FOR THE MEASUREMENT OF VAPOR PRESSURE

(84) Etats contractants désignés:
**AT BE BG CH CY CZ DE DK EE ES FI FR GB GR HU IE IT LI LU MC NL PT SE SI SK TR**

(30) Priorité: **14.01.2002 FR 0200354**

(43) Date de publication de la demande:
**13.10.2004 Bulletin 2004/42**

(73) Titulaire: **UNIVERSITE CLAUDE BERNARD - LYON 1
69622 Villeurbanne Cédex (FR)**

(72) Inventeurs:
• **JOSE, Jacques
F-38200 VILLETTE DE VIENNE (FR)**
• **MOKBEL, Ilham
F-69009 LYON (FR)**

(74) Mandataire: **Sarlin, Laure V.
Cabinet Beau de Loménie
51, avenue Jean-Jaurès
BP 7073
69301 Lyon Cedex 07 (FR)**

(56) Documents cités:
**US-A- 4 388 272**

• **ALLESSANDRO DELLE SITE: "The vapor pressure of environmentally significant organic chemicals: a review of methods and data at ambient temperature" JOURNAL OF PHYSICAL AND CHEMICAL REFERENCE DATA, vol. 26, no. 1, janvier 1997 (1997-01), pages 157-193, XP008009670 AMERICAN CHEMICAL SOCIETY, NEW YORK, NY,, US ISSN: 0047-2689**

• **ZELLERS E T ET AL: "Evaluating porous-layer open-tubular capillaries as vapor preconcentrators in a microanalytical system" SENSORS AND ACTUATORS B, ELSEVIER SEQUOIA S.A., LAUSANNE, CH, vol. 67, no. 3, 1 septembre 2000 (2000-09-01), pages 244-253, XP004229027 ISSN: 0925-4005**

• **I. MOKKBEL ET AL.: "vapor pressures of 12 alkylcyclohexanes, cyclopentane, bytylcyclopentane and trans-decahydronaphthalene down to 0.5 Pa. Experimental results, correlation and prediction by an equitation of state" FLUID PHASE EQUILIBRIA, vol. 108, 1 juillet 1995 (1995-07-01), pages 103-120, XP001115089 Elsevier Science B.V.**

• **N. BUREAU ET AL.: "Vapour pressure measurements and prediction for heavy esters" JOURNAL OF CHEMICAL THERMODYNAMICS., vol. 33, 2001, pages 1485-1498, XP001115088 ACADEMIC PRESS, LONDON., GB ISSN: 0021-9614**

• **J.L.HALES ET AL.: "a transpiration-g.l.c. apparatus for measurement of low vapour concentration" JOURNAL OF CHEMICAL THERMODYNAMICS., vol. 13, no. 5, mai 1981 (1981-05), pages 591-601, XP008009684 ACADEMIC PRESS, LONDON., GB ISSN: 0021-9614 cité dans la demande**

**EP 1 466 158 B1**

## Description

La présente invention concerne le domaine des techniques analytiques de produits chimiques et vise plus particulièrement un appareillage et un procédé destiné à mesurer des pressions de vapeur, également nommées tensions de vapeur.

La pression de vapeur à une température donnée d'un produit chimique est une grandeur thermodynamique fondamentale, qu'il est nécessaire de connaître pour toute opération de séparation, purification, extraction, mettant en oeuvre un changement de phase. Aussi, les techniques de mesure de pressions de vapeur, et en particulier de faibles pressions de vapeur correspondant à des composés peu volatils, intéressent de nombreux secteurs industriels tels que l'industrie pétrolière, l'industrie pharmaceutique, l'industrie agrochimique et les industries liées à la protection de l'environnement.

Pour mesurer des pressions de vapeur inférieures à 100 Pa, trois types de méthodes sont généralement utilisées :

- Les méthodes dites « statiques » dans lesquelles la phase condensée liquide ou solide du composé à étudier est soigneusement dégazée et placée dans une enceinte préalablement vidée d'air et maintenue à une température constante. Lorsque l'équilibre thermodynamique est atteint, la pression de vapeur est mesurée à l'aide de capteurs dont le principe repose sur le déplacement d'une membrane sous l'effet de la pression de vapeur du composé étudié. Cette technique permet de mesurer des pressions de vapeur comprises entre 1 Pa et 200 KPa.

- Les méthodes par évaporation dans lesquelles les pressions de vapeur sont déterminées en mesurant la vitesse d'évaporation du composé à étudier, ou bien la vitesse d'effusion de ce composé à travers un orifice. Ces méthodes présentent des difficultés, d'une part, d'ordre théorique, car le processus cinétique qui intervient est complexe, et d'autre part, d'ordre expérimental, dû à l'incertitude sur le taux d'effusion liée à la difficulté de connaître le temps à partir duquel commence et finit l'effusion. Ces méthodes restent donc peu précises.

- Les méthodes par saturation, dans lesquelles le produit à étudier est évaporé dans une enceinte, les vapeurs étant entraînées par un gaz inerte. La pression de vapeur est obtenue après détermination de la concentration de la vapeur dans le gaz inerte saturé.

Divers appareillages mettant en oeuvre la méthode par saturation pour la mesure de faibles pressions de vapeur, inférieures à 100 Pa, sont décrits dans l'art antérieur. Ce type d'appareillage comprend une source de gaz inerte, des moyens de saturation du gaz inerte en composé à étudier, ces moyens étant maintenus à température constante correspondant à la température à laquelle la pression de vapeur doit être déterminée, des moyens de mesure du débit du gaz inerte et des moyens de détermination de la concentration en vapeur du composé étudié dans le gaz inerte saturé. En particulier, J.L.Hales et al. dans J.Chem.Thermodynamics 1981, 13, 591-601 décrivent un tel appareillage dans lequel les moyens de détermination de la concentration sont constitués d'une colonne pour chromatographie phase gazeuse couplée à un détecteur à ionisation de flamme plus généralement appelé appareil d'analyse CPG (chromatographie phase gazeuse). La concentration des composés est déterminée à partir de la surface des pics des courbes délivrées par l'appareil d'analyse CPG. Dans ce cas, il est nécessaire de procéder à un étalonnage à la seringue de l'appareil d'analyse CPG lors de chaque mesure. Aussi, la reproductibilité et la précision des mesures ne sont pas satisfaisantes. De plus, les mesures effectuées avec l'appareillage décrit par J.L.Hales *et al.* sont limitées et ne peuvent atteindre des valeurs inférieures à $10^{-3}$ Pa. En effet, pour des mesures de faibles pressions de vapeur, des solutions étalons de très faible concentration sont injectées à la seringue entraînant une mauvaise intégration des pics due à une surface de solvants très importante par rapport à celle de l'étalon.

Par conséquent, il existe un besoin pour un appareillage et un procédé de mesure de pression de vapeur mettant en oeuvre d'autres techniques d'étalonnage et autorisant de ce fait des mesures de pressions de vapeur plus précises.

Dans ce contexte, l'un des objectifs de la présente invention est justement de fournir un appareillage qui soit simple à mettre en oeuvre, et qui permette de mesurer des pressions de vapeur de manière fiable.

Un autre objectif de la présente invention est de fournir un appareillage qui permette d'effectuer des mesures dans un domaine de pressions compris entre environ $10^3$ et $10^{-5}$ Pa et en particulier, dans le domaine des faibles pressions de vapeur et notamment jusqu'à des pressions de l'ordre de $10^{-4}$ Pa - $10^{-5}$ Pa.

La présente invention a pour objet un appareillage mettant en oeuvre une méthode relative qui permet simultanément d'étalonner l'appareillage et d'étudier le composé dont la pression de vapeur est à déterminer. La présente invention a donc pour objet un appareillage pour mesurer la pression de vapeur $P_1^0$ d'un composé à une température donnée $T_1$ comprenant :

- un premier circuit assurant la circulation d'un gaz inerte dans un sens donné entre une entrée et une sortie et muni de moyens de mesure du débit $D_1$ du gaz inerte et de moyens de saturation, à la température $T_1$, du gaz inerte en composé dont la pression de vapeur $P_1^0$ est à mesurer,
- un deuxième circuit assurant la circulation du gaz inerte dans un sens donné entre une entrée et une sortie et muni de moyens de mesure du débit $D_2$ du gaz inerte et de moyens de saturation, à une température $T_2$, du gaz inerte en un étalon de pression de vapeur $P_2^0$ à la température $T_2$,
- une canalisation surchauffée, sur laquelle les deux circuits se rejoignent à leur sortie, et qui assure le transport du gaz inerte saturé à la fois en composé et en étalon vers une colonne pour chromatographie en phase gazeuse,
- des moyens pour modifier la température de ladite colonne chromatographique pour que cette dernière assure tout d'abord le piégeage du composé et de l'étalon puis leur libération vers des moyens assurant leur détection de manière quantitative.

Ainsi, le composé à étudier et l'étalon sont chacun entraînés au niveau des moyens de saturation, par le gaz inerte, puis piégés sur une colonne chromatographique. Lorsque le piégeage sur la colonne chromatographique est suffisant, l'élévation de la température de la colonne chromatographique permet la libération du composé à étudier et de l'étalon, qui sont simultanément quantifiés grâce au détecteur.

La présente invention a également pour objet un procédé pour mesurer la pression de vapeur $P_1^0$ d'un composé à une température $T_1$, comprenant les étapes suivantes :

a) faire circuler un gaz inerte, avec un débit $D_1$ et à la température $T_1$, au travers de moyens de saturation en composé dont la pression de vapeur $P_1^0$ est à mesurer, ces moyens de saturation étant maintenus à la température $T_1$ ;

b) en parallèle, faire circuler le gaz inerte avec un débit $D_2$ au travers de moyens de saturation en un étalon dont la pression de vapeur $P_2^0$ à une température $T_2$ est connue, ces moyens de saturation étant maintenus à la température $T_2$ ;

c) réunir le gaz inerte obtenu à l'étape a) qui est saturé en composé et le gaz inerte obtenu à l'étape b) qui est saturé en étalon ;

d) piéger dans une colonne chromatographique, pendant un temps de piégeage $t$, le gaz inerte obtenu à l'étape c) qui est saturé en composé et en étalon, le volume de composé piégé étant égal au produit du temps $t$ de piégeage par le débit $D_1$ et le volume d'étalon piégé étant égal au produit du temps $t$ de piégeage par le débit $D_2$ ;

e) élever la température de la colonne chromatographique pour libérer le composé et l'étalon piégés à l'étape d) vers un détecteur assurant leur analyse quantitative et ainsi déterminer la masse $m_1$ de composé piégée et la masse $m_2$ d'étalon piégée ;

f) calculer la pression de vapeur $P_1^0$ à la température $T_1$ du composé à partir notamment des valeurs de $P_2^0$, $m_1$, $m_2$, $D_1$ et $D_2$.

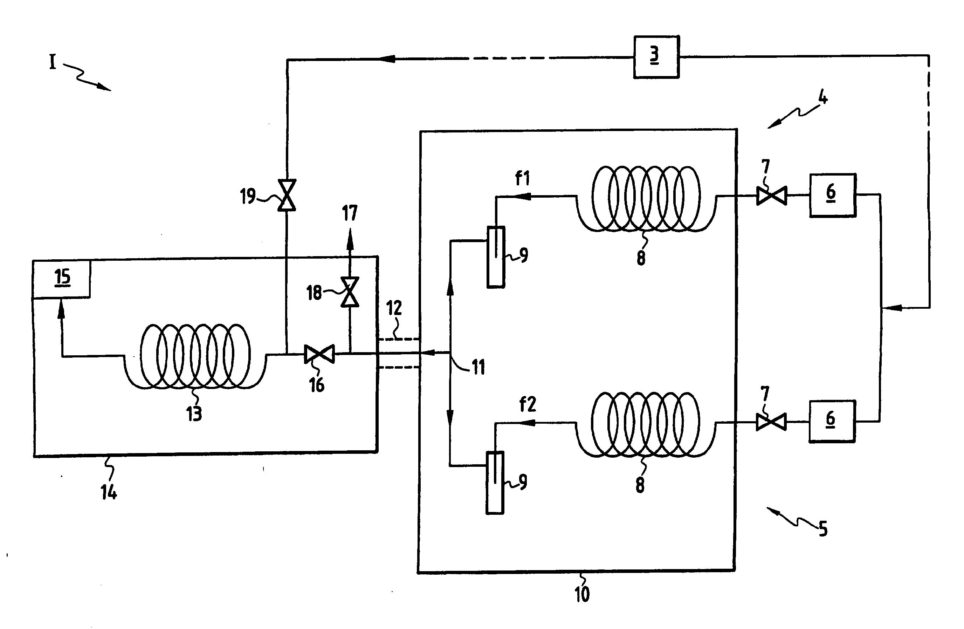

Diverses autres caractéristiques ressortent de la description faite ci-dessous en référence au dessin annexé qui montre, à titre d'exemple non limitatif, une forme de réalisation de l'objet de l'invention.

La **figure unique** est une vue schématique d'un exemple de réalisation d'un appareillage conforme à l'invention.

La présente invention consiste donc à mesurer la pression de vapeur $P_1^0$ d'un composé **1** à une température $T_1$, de façon relative, c'est-à-dire en étudiant simultanément un étalon **2** dont la pression de vapeur $P_2^0$ à une température $T_2$ est connue. Le composé **1** peut être un produit pur ou un mélange de produits. L'étude de mélange binaires ou à multiconstituants peu volatils est très utile dans le domaine de l'ingénierie. Les données de faibles pressions de vapeur, comprises entre 20 Pa et $10^{-5}$ Pa, sont pratiquement inexistantes dans la littérature. Les quelques produits étudiés ont des pressions de vapeur très mal connues car peu précises. L'erreur est presque toujours supérieure à 10 % au voisinage de 20 Pa et est encore plus importante pour les faibles pressions de vapeur pour atteindre plus de 100 %. Pour constituer une banque de données expérimentales fiables permettant de constituer des étalons, des pressions de vapeur supérieures ou égales à 1 Pa ont été mesurées avec un appareil statique. Ces premiers étalons « primaires » obtenus avec l'appareil statique permettent de déterminer avec l'appareillage selon l'invention des étalons « secondaires », présentant des pressions de vapeur de l'ordre de $10^{-2}$ Pa. Ces étalons « secondaires » permettent ensuite d'effectuer des mesures de pressions de vapeur pouvant atteindre $10^{-4}$ Pa, voire $10^{-5}$ Pa.

La **figure unique** est une vue schématique d'un exemple de réalisation d'un appareillage **I** selon l'invention. Ledit appareillage comporte une source **3** en gaz inerte comme l'hélium ou l'azote jouant le rôle de gaz vecteur. Cette source de gaz alimente un premier circuit **4** destiné à assurer la saturation du gaz inerte en composé **1,** et un deuxième circuit **5** destiné à assurer la saturation du gaz inerte en étalon **2**. Le premier circuit **4** et le deuxième circuit **5** comportent chacun des moyens pour modifier le débit de gaz inerte et des **moyens 6** pour mesurer ce débit. Dans l'exemple de réalisation présenté à la **figure unique,** ces moyens se présentent sous la forme d'un débitmètre **6**. Ce débitmètre peut être relié par un système de vanne **7** aux moyens **8** de saturation situés sur chacun des deux circuits **4** et **5**.

Les moyens **8** de saturation sont, par exemple, des colonnes habituellement utilisées pour les analyses CPG. Différents types de colonnes peuvent être utilisés et de préférence :

- des colonnes dites « remplies » constituées par un tube inox de diamètre compris entre 3 mm et 6 mm environ, de longueur variant entre 1 m et 3 m environ et remplies d'un support poreux inerte de granulométrie comprise entre 50 $\mu$m et 300 $\mu$m. Le support poreux est imprégné avec le composé **1** à étudier ou avec l'étalon **2,**
- des colonnes dites « capillaires » constituées par un tube en silice ou en inox de diamètre intérieur variant entre 0,2 mm et 0,5 mm environ, de longueur comprise entre 5 m et 50 m environ et dont la paroi intérieure est tapissée avec le composé **1** à étudier ou avec l'étalon **2.** Les techniques de dépôt sont celles classiquement utilisées pour préparer les colonnes capillaires et sont bien connues de l'homme de l'art.

Dans les explications techniques suivantes, le composé **1** et l'étalon **2** sont nommés indifféremment « produit ».

Les colonnes capillaires nécessitent moins de produit (environ 0,1 g) que les colonnes remplies (environ 1 g), ce qui est un avantage si le produit est rare ou très cher. En revanche, la préparation de la colonne est beaucoup plus délicate. Aussi, les colonnes remplies sont particulièrement préférées dans la présente invention.

Pour l'imprégnation des colonnes remplies, les deux techniques suivantes peuvent, par exemple, être mises en oeuvre :

- la technique d'imprégnation en « batch » qui est classiquement utilisée en CPG : le support est mis en suspension dans un solvant contenant le produit dissous. Le solvant est ensuite évaporé et le support ainsi imprégné est introduit dans la colonne comportant deux petits tampons de laine de verre à chaque extrémité ;
- la technique d'imprégnation *« in situ »* qui n'est pas utilisée en CPG mais qui est une technique connue : une fois la colonne remplie de support, une certaine quantité de produit à l'état liquide est introduite par une des extrémités. Le produit migre ensuite lentement dans la colonne sous la poussée du gaz de saturation.

Dans le cas de mesures de pressions de vapeur plus élevées de l'ordre de $10^3$ Pa, on utilisera avantageusement comme moyen de saturation **9** deux barboteurs. Ces barboteurs pourront être constitués par une réserve contenant entre 1ml et 10ml de composé **1** ou d'étalon **2,** et équipés d'un tube plongeur permettant le bullage du gaz inerte. Ces barboteurs pourront être précédés de serpentins servant de système de préchauffage du gaz inerte à la(es) température (s) du(es) four(s) **10.**

En fonction des moyens **8** de saturation utilisés, l'homme du métier choisira les débits $D_1$ pour le gaz inerte dans le circuit assurant la saturation en composé **1** et $D_2$ dans le circuit assurant la saturation en étalon **2.** Par exemple, dans le cas de moyens de saturation de type colonne remplie, des débits compris entre 0,5 cm$^3$/min et 20 cm$^3$/min, voire 50 cm$^3$/min seront de préférence utilisés. Dans le cas de moyens de saturation de type colonne capillaire, des débits beaucoup plus faibles, de l'ordre de 0,1 cm$^3$/min, pourront être utilisés.

Afin d'atteindre les températures $T_1$ ou $T_2$ désirées, les moyens **8** de saturation sont placés dans un four **10** comme le montre la **figure.** Il s'agit, par exemple, d'un four chromatographique commercial capable de maintenir une température comprise entre 20 et 400 °C avec une bonne stabilité de la température ($\pm$ 0,1 °C). Les moyens de saturation peuvent être disposés dans un même four d'évaporation lorsque les températures $T_1$ et $T_2$ sont identiques, ou bien, lorsque les températures $T_1$ et $T_2$ sont différentes, dans deux fours d'évaporation distincts. Une alimentation cryogénique pourrait également être prévue dans le but d'étudier le composé **1** à basse température (- 20 °C voire - 30 °C). Il pourrait aussi être envisagé d'utiliser un cryostat à la place du four pour étudier le composé **1** à température encore plus basse. La température habituelle de travail d'un four CPG varie de 20 à 400 °C, éventuellement de - 30 à 400 °C si le four est équipé d'une alimentation cryogénique.

En sortie des moyens **8** de saturation, le premier circuit **4** et le deuxième circuit **5** peuvent être munis d'un décanteur **9.** La fonction des décanteurs **9** est d'éliminer par décantation les particules liquides pouvant éventuellement être entraînées par le courant gazeux au cas où les moyens **8** de saturation auraient été « trop chargés » en composé **1** ou en étalon **2.** Ces décanteurs **9** permettent également de protéger la colonne chromatographique **13** de piégeage et d'analyse, et surtout les moyens **15** de détection qui lui font suite, d'une arrivée trop importante de composé **1** et d'étalon **2** risquant de contaminer le détecteur **15** et nécessitant son démontage complet.

Ensuite, une jonction ou connexion entre le premier circuit **4** et le deuxième circuit **5** se fait de manière classique, par exemple, à l'aide d'un connecteur **11** en forme de « Té » bien connu en CPG. Dans l'exemple de réalisation présenté à la **figure unique,** la jonction **11** ainsi que les décanteurs **9** sont situés à l'intérieur du four **10.**

Après la jonction **11,** le gaz inerte saturé à la fois en composé **1** et en étalon **2** issu de la réunion du gaz inerte saturé en composé **1** venant du premier circuit **4** et du gaz inerte saturé en étalon **2** venant du deuxième circuit **5** est amené au moyen d'une canalisation **12** surchauffée vers une colonne chromatographique **13** de piégeage et d'analyse.

Cette canalisation **12** surchauffée est indispensable car il est impossible de connecter directement les moyens **8** de saturation qui se trouvent aux différentes températures $T_1$ et $T_2$ et la colonne chromatographique **13** qui se trouve à une température $T_3$ adaptée au piégeage du composé **1** et de l'étalon **2.** Pour éviter d'importantes erreurs dues à des phénomènes de condensation, cette canalisation est chauffée à une température supérieure à celle du four **10** d'évaporation, par exemple de 40 °C environ, sans atteindre pour cela une température supérieure à 300 ou 350 °C, ce qui risquerait d'engendrer la décomposition thermique du composé **1** ou de l'étalon **2** évaporé.

De préférence, cette canalisation sera en silice non modifiée, afin de limiter les phénomènes d'absorption. Une telle canalisation en silice non modifiée sera de préférence utilisée dans le cas de composés peu volatils.

La colonne chromatographique **13** de piégeage et d'analyse est une colonne d'analyse CPG classique. Là encore, une colonne remplie ou capillaire pourra être utilisé. Une colonne remplie contient un support poreux imprégné par une substance « absorbante » ou par un support poreux capable d'adsorber le composé **1** et l'étalon **2** à sa surface. L'homme du métier sera à même de choisir la nature de la substance absorbante qui est généralement un liquide très peu volatil appelé en CPG « phase stationnaire », ou la nature du support adsorbant en fonction du composé **1** à étudier et de l'étalon **2.** Une colonne « capillaire » est constituée par un tube capillaire tapissé intérieurement par un film de liquide absorbant ou par un support poreux adsorbant (éventuellement imprégné par un liquide absorbant). Un grand nombre de colonnes CPG est disponible dans le commerce. Lors du piégeage, la colonne chromatographique **13** se trouve à une température $T_3$ inférieure aux températures $T_1$ et $T_2$ des moyens **8** de saturation. Il existe de préférence au moins 20 à 30 °C d'écart entre la température $T_3$ de piégeage et les température $T_1$ et $T_2$ de saturation.

L'homme du métier sera à même de déterminer le temps **t** de piégeage approprié qui doit être à la fois suffisamment long pour obtenir un signal d'analyse correct, en particulier pour le produit le moins volatil et pas trop long pour éviter la saturation du signal d'analyse par le produit le plus volatil. Le temps **t** de piégeage sera de préférence compris entre 3 minutes et 120 minutes. Le temps **t** de piégeage n'a d'ailleurs pas besoin d'être connu avec précision, car seul le débit $D_1$ du gaz inerte dans le premier circuit **4** destiné au composé **1** et le débit $D_2$ du gaz inerte dans le deuxième circuit **5** destiné à l'étalon **2** seront pris en compte dans le mode de calcul. Une vanne **16** permet, lorsque le temps de piégeage est suffisant, d'interrompre l'arrivée de gaz saturé sur la colonne chromatographique **13.**

Il peut également être prévu avant de commencer l'étape de piégeage, d'évacuer le gaz saturé vers une sortie **17** située en amont de la vanne **16** afin d'atteindre l'équilibre dans la canalisation **12** surchauffée. L'accès du gaz inerte saturé à cette sortie **17** est contrôlée par une vanne **18** qui est ouverte pendant l'évacuation, alors que la vanne **16** est fermée. Lorsque le piégeage commence, la vanne **16** est alors ouverte et la vanne **18** est fermée. Les vannes **16** et **18** pourront être supprimées afin de minimiser les phénomènes d'absorption et ainsi diminuer les pressions minimales mesurables. Dans ce cas, on utilisera en sortie de la canalisation **12** un té permettant l'arrivée du gaz vecteur qui permettra de connecter directement la canalisation **12** à la colonne chromatographique **13.** Là encore, ce té sera avantageusement en silice non modifiée, afin de limiter les phénomènes d'absorption.

Lorsque le piégeage est terminé, il est alors nécessaire, grâce à des moyens **14,** d'élever la température de la colonne chromatographique **13** afin de libérer le composé **1** et l'étalon **2.** Comme pour les moyens **8** de saturation, la colonne **13** de piégeage et d'analyse est, par exemple, placée dans un four **14,** afin de travailler à la température désirée. Pour l'analyse, la température de la colonne CPG est progressivement élevée de la température de piégeage $T_3$ jusqu'à 350-400 °C grâce au programmateur de températures du four **14.**

La colonne chromatographique **13** est également reliée à la source de gaz inerte **3.** Ceci permet, lorsque le piégeage est terminé, de faire circuler du gaz inerte à l'intérieur de la colonne chromatographique **13** grâce à l'ouverture d'une vanne **19.** Ainsi, lorsque la température de la colonne chromatographique **13** est suffisante, le gaz inerte entraîne le composé **1** et l'étalon **2** vers un détecteur **15,** auquel la colonne **13** d'analyse et de piégeage est reliée et qui permet de déterminer les masses $m_1$ de composé **1** piégé et $m_2$ d'étalon **2** piégé.

Différents types de détecteurs **15** peuvent être utilisés soit des détecteurs dits « universels », c'est à dire permettant la détection de pratiquement tous les produits, soit des détecteurs dits « spécifiques », c'est à dire ne détectant que certains types de produits. Comme détecteur universels, on pourra citer les détecteurs à ionisation de flamme (FID), les détecteurs à conductivité thermique (TCD), les spectromètres de masse (MS) et comme détecteurs spécifiques les détecteurs à capture d'électrons (ECD), les détecteurs à photométrie de flamme (FPD), les détecteurs à plasma induit par micro-ondes (MIP), les détecteurs à émission atomique (AED), les détecteurs à chimiluminescence du soufre (SCD), les détecteurs azote/phosphore dit thermoioniques (NPD), les détecteurs à photoionisation (PID). L'analyse par ces détecteurs **15** chromatographiques en phase finale permet notamment de vérifier que l'étalon **2** et le composé **1** à étudier n'ont pas subi de dégradation.

En particulier, un détecteur **15** FID est utilisé. Ce détecteur permet de délivrer un signal comportant deux pics, l'un représentant le composé **1,** l'autre l'étalon **2.** Bien entendu, lorsque le composé **1** est un mélange, différents pics seront obtenus. La surface de chacun de ces pics peut être corrélée à la masse de produit piégé selon la relation suivante :

$$m_i = k_i\, S_i$$

avec :

- $S_i$ = surface chromatographique du produit i,

- et $k_i$ = facteur de réponse du FID pour le composé i.

Selon l'invention, la pression $P_1^0$ du composé 1 est alors calculée à partir des valeurs de $P_2^0$, $m_1$, $m_2$, $D_1$ et $D_2$. Plus précisément, l'équation (II) suivante peut être utilisée :

$$P_1^{\ 0} = P_2^{\ 0}\ \frac{m_1\ M_2\ D_2}{m_2\ M_1\ D_1}\ \exp\left[\left(\frac{V_{L2}}{RT_2} - \frac{V_{L1}}{RT_1}\right)P\right]\ \textbf{(II)}$$

dans laquelle :

- $M_1$ = masse molaire du composé,
- $M_2$ = masse molaire de l'étalon,
- $V_{L1}$ = volume molaire du composé,
- $V_{L2}$ = volume molaire de l'étalon,
- R = constante des gaz parfaits,
- P = pression du gaz inerte.

Selon une première variante, lorsque $T_1 = T_2$, la pression $P_1^0$ est calculée à partir de l'équation (III) suivante :

$$P_1^{\ 0} = P_2^{\ 0}\ \frac{m_1\ M_2\ D_2}{m_2\ M_1\ D_1}\ \exp\left[\frac{V_{L2} - V_{L1}}{RT_1}P\right]\ \textbf{(III)}$$

dans laquelle $M_1$, $M_2$, $V_{L1}$, $V_{L2}$ et P sont tels que définis pour (II).

Etant donné que le facteur correctif :

$$\exp\left[\frac{V_{L2} - V_{L1}}{RT_1}P\right]$$

est proche de 1, selon une autre variante, la pression $P^0_1$ est calculée à partir de l'équation (IV) suivante :

$$P_1^{\ 0} = P_2^{\ 0}\ \frac{m_1 M_2\ D_2}{m_2 M_1\ D_1}\quad \textbf{(IV)}$$

dans laquelle $M_1$ et $M_2$ sont tels que définis pour (II).

Le calcul de la pression de vapeur consiste à calculer un rapport de pressions, l'une des deux pressions, celle de l'étalon, étant connue.

Différents exemples de mesures ont été effectués dans les conditions expérimentales suivantes :

1) On utilise les colonnes 8 de saturation suivantes :

- tube inox : diamètre extérieur = 3,2 mm, diamètre intérieur = 2,2 mm, longueur = 3 m,
- remplissage constitué par du support chromatographique type chromosorb p 80/100 mesh imprégné en batch par le composé 1 étudié (hydrocarbure) à un taux de 30 % environ, ou par l'étalon 2.
- les deux colonnes 8 de saturation, l'une contenant l'étalon et l'autre le composé à étudier, sont disposées dans un four 10 d'évaporation constitué par le four d'un appareil CPG HP5890 (Société AGILENT TECHNOLOGIES) :

  - température $T_1 = T_2$: variable selon l'essai,

- débits d'azote (gaz inerte utilisé pour la saturation) : variable selon l'essai

2) Canalisation **12** surchauffée à une température de 240 °C.

3) Dispositif de piégeage et d'analyse constitué par un appareil CPG HP6890, comportant un détecteur FID **15** et une colonne chromatographique **13** de piégeage et d'analyse : colonne commerciale Macrobore (fournisseur : SGE) présentant les caractéristiques suivantes :

- longueur : 10 mètres,
- épaisseur de film : 2,65 $\mu$m,
- diamètre intérieur : 0,53 mm,
- diamètre extérieur : 0,68 mm,
- type : phase greffée, BPX1 (non polaire),
- température **T$_3$** de piégeage : 45 °C,
- conditions analytiques :

    - température de l'injecteur : 240 °C,
    - température du détecteur FID **15 :** 320 °C,
    - température du four **14 :** rampe linéaire de température de 45 °C à 270 °C à la vitesse de 30 °C/min ; isotherme final à 270 °C maintenu pendant 15 minutes puis retour aux conditions initiales de piégeage (45 °C),
    - débits dans le FID : air = 300 ml/min, H$_2$ = 30 ml/min, débit gaz vecteur (N$_2$) = 4 ml/min.

Dans ces conditions, l'équation **(III)** devient l'équation **(IIIa)** suivante :

$$P_1^{\,0} = P_2^{\,0} K \frac{S_1 M_2 D_2}{S_2 M_1 D_1} \exp\left[\frac{(V_{L2} - V_{L1})}{RT_1} P_{N2}\right] \quad \textbf{(IIIa)}$$

dans laquelle :

- P$_i^0$ = tension de vapeur du corps pur i,
- Si = surface chromatographique du composé i,
- Mi = masse molaire du composé i,
- Di = débit volumique de i,
- V$_{Li}$ = volume molaire de i en phase liquide,
- i = 1 (données relatives au composé **1**) ou 2 (données relatives à l'étalon **2**),
- R = constante des gaz parfait,
- P$_{N2}$ = pression d'azote (gaz inerte d'évaporation),
- K = facteur de réponse massique relatif déterminé par étalonnage.

L'appareillage selon l'invention est, par exemple, utilisé sur des *n*-alcanes de grande masse molaire. L'étude de tous les *n*-alcanes comprenant de 12 (*n*-C$_{12}$) à 40 (*n*-C$_{40}$) atomes de carbone a permis de calculer le facteur de réponse **K** du détecteur FID **15** qui est égal à 1 aux incertitudes des mesures près ($\pm$ 1 %), ce qui correspond à la valeur théorique. Dans les exemples qui suivent, on utilise l'équation **(IV)** pour le calcul des pressions de vapeur. Cette équation devient donc :

$$P_1^{\,0} = P_2^{\,0} \frac{S_1 M_2 D_2}{S_2 M_1 D_1} \quad \textbf{(IVa)}$$

Un premier exemple de mesure a été réalisé en prenant le *n*-alcane *n*-C$_{18}$ comme étalon pour mesurer la pression de vapeur à 100 °C du *n*-alcane *n*-C$_{20}$.

Dans ce cas, le gaz inerte utilisé est l'azote et P$_{N2}$ = 2bar = 2.10$^5$ Pa.

A titre indicatif, le facteur correctif :

$$\exp\left[\frac{(V_{L2} - V_{L1})}{RT}\, P_{N2}\right]$$

a été calculé et est égal à 1,002.

La valeur connue dans la littérature (C. VITON, M. CHAVRET, E. BEHAR, J. JOSE "Vapor pressures of normal alkanes from decane to eicosane", Eldata : Int. Electron. J. Phys-Chem. Data (1996), 2, 150-161) pour la pression de vapeur de $n$-$C_{18}$ à 100 °C est $P_2^0$ = 23,25 Pa

Avec des débits $D_2$ = 4,19 ml/min et $D_1$ = 4,02 ml/mn et un temps de piégeage de 60 minutes, on obtient par l'analyse chromatographique une surface pour $n$-$C_{18}$ de $6,88.10^6$ et pour $n$-$C_{20}$ de $1,61.10^6$. L'unité de ces surfaces est arbitraire et l'incertitude est estimée à 2 %. On en déduit, à partir de l'équation **(IVa)** la pression de $n$-$C_{20}$ à 100 °C qui est $P_1^0$ = 5,11 Pa, soit un écart relatif de 3 % par rapport aux valeurs expérimentales données par Karim SASSE, dans Thèse de Doctorat, Lyon 21 juillet 1988, *"Réalisation et essai d'un appareil statique permettant la mesure de faibles tensions de vapeur. Application à l'étude d'hydrocarbures aliphatiques et polyaromatiques"* et par MACKNICK A.B., PRAUSNITZ J.M., dans "Vapor pressures of high-molecular-weight hydrocarbons", Journal of Chemical Engineering Data, 1979, vol. 24, n° 3, 175-178.

Un deuxième exemple de mesure a été effectué en prenant le $n$-alcane $n$-$C_{18}$, comme étalon pour mesurer la pression de vapeur à 80 °C du $n$-alcane $n$-$C_{24}$.

La pression de vapeur saturante du $n$-$C_{18}$ à 80 °C est connue de C. VITON, M. CHAVRET, E. BEHARD, J. JOSE "Vapor pressures of normal alkanes from decane to eicosane", Eldata : Int. Electron. J. Phys-Chem. Data (1996), 2, 150-16: $P_2^0$ = 5,06 Pa ($\pm$ 3 %).

L'analyse chromatographique des composés piégés dans les conditions suivantes :

- temps de piégeage = 30 min,
- $D_2$ = 7,77 ml/min, $D_1$ = 8,01 ml/min,

donne les surfaces suivantes (unité arbitraire, incertitude estimée à 2 %) :

$$S_2 = 720\,000 \text{ et } S_1 = 7\,650$$

On en déduit donc, à partir de l'équation **(IVa),** la pression de vapeur de $P_1^0$ de $n$-$C_{24}$ à 80 °C : $P_1^0$ = 0,0392 Pa, soit un écart de 6 % par rapport aux données extrapolées de *"*Prediction of vapor pressures of alkanes from C20 to C30 through a group contribution equation of state", T. GUETACHEW, J. JOSE, E. RAUZY, I. MOKBEL, The sixteenth thermodynamics conférence : Thermodynamics and statistical, Mechanics with industrial application, 14-16 Avril 1999, Imperial College London. Cet écart est relativement important, essentiellement à cause de l'extrapolation, ces auteurs n'ayant pas effectué des mesures pour des pressions aussi faibles.

Ces résultats montrent que, dans le cas des hydrocarbures, la pression minimale mesurable, avec un temps de mesure raisonnable, est d'environ $10^{-4}$ Pa. En effet, on peut estimer qu'en CPG les surfaces doivent avoir au moins une valeur de 500 unités avec les systèmes habituels d'intégration. Dans le cas du $n$-$C_{24}$, par simple proportionnalité, en admettant un temps de piégeage de 120 minutes et un débit de 16 ml/min, une telle surface conduit à une pression de l'ordre de $10^{-4}$ Pa. Pour d'autres composés, par exemple les pesticides, on peut utiliser des détecteurs nettement plus sensibles que le FID. Pour de tels composés, la pression limite serait alors de $10^{-5}$ Pa.

Un troisième exemple de mesure a été réalisé sur le $n$-alcane $n$-$C_{24}$. Dans ce but, le $n$-$C_{24}$ a été étudié préalablement avec le dispositif statique disponible au laboratoire jusqu'à une pression de 1 Pa. Au moyen de l'équation de Clapeyron, qui est une relation thermodynamique rigoureuse, il est possible d'extrapoler d'une manière très fiable les pressions de vapeur dans le domaine des très faibles pressions. L'équation de Clapeyron s'exprime sous la forme :

$$\left(\frac{d\ln P}{dT}\right)_{sat} = \frac{1}{RT^2}\frac{\Delta H_{vap}}{\Delta Z_{vap}}$$

P : Pression de vapeur
$\Delta H_{vap}$ : enthalpie de vaporisation

$\Delta Z_{vap}$ : différence des facteurs de compressibilité entre la vapeur saturée et le liquide saturé. L'utilisation de cette équation nécessite donc la connaissance des grandeurs thermodynamiques $\Delta H_{vap}$ et $\Delta Z_{vap}$ dans le domaine de température étudié.

L'enthalpie de vaporisation variant avec la température, son calcul nécessite en plus la donnée des capacités calorifiques de la phase liquide et de la phase vapeur. Il en est de même pour $\Delta Z_{vap}$; dans ce cas son calcul nécessite la donnée du deuxième coefficient du viriel de la phase vapeur. Toutes ces données ne sont disponibles que pour un nombre très limité de produits (parmi lesquels le $n$-$C_{24}$ et le $n$-$C_{28}$). Bien que le $n$-$C_{24}$ n'ait été mesuré que jusqu'à IPa, grâce à l'équation de Clapeyron il est possible d'extrapoler les tensions de vapeur jusque vers $10^{-2}$ Pa d'une manière fiable.Cette procédure d'extrapolation utilisée pour la première fois par King et Al-Najjar (Chem. Eng. Sci., 1974, 29, 1003-1011), a été ensuite utilisée par d'autres auteurs qui ont ainsi validé cette méthode d'extrapolation.

L'utilisation de cette méthode au $n$-$C_{24}$ a permis le calcul des coefficients d'une équation de Cox permettant l'extrapolation des tensions de vapeur jusqu'à $10^{-2}$ Pa. Le TABLEAU 1 ci-après permet de comparer les mesures expérimentales obtenues avec l'appareil statique jusqu'à 1 Pa avec les valeurs restituées par cette équation.

TABLEAU 1 : Comparaison entre les pressions expérimentales du $n$-$C_{24}$ obtenues avec l'appareil statique et les valeurs calculées par l'équation de Cox.

| $T°_1C$ | $P_{exp}$ (Pa) | 100* $(P_{exp}-P_{Cox})/P_{exp}$ |
|---|---|---|
| 120 | 1,720 | 0,80 |
| 130 | 3,726 | 0,82 |
| 140 | 7,682 | 0,74 |
| 150 | 15,144 | 0,63 |
| 160 | 28,66 | 0,54 |
| 170 | 52,25 | 0,52 |
| 180 | 92,06 | 0,58 |
| 190 | 157,23 | 0,76 |

Il apparaît que l'écart moyen $\Delta P/P\%$ n'est que de 0,67 %. L'équation de Cox restitue donc correctement les tensions de vapeur expérimentales du $n$-$C_{24}$ entre 1,7 Pa et 157 Pa. Elle permet ensuite d'extrapoler les tensions de vapeur du $n$-$C_{24}$ jusqu'à $10^{-2}$ Pa environ.Le TABLEAU 2 ci-après permet de comparer les pressions ainsi calculées par l'équation de Cox aux valeurs expérimentales obtenues avec le dispositif à saturation selon l'invention en utilisant comme étalon le $n$-$C_{20}$ (mesuré jusqu'à 0,1 Pa). On observe donc un bon accord entre les pressions expérimentales et les pressions calculées par extrapolation puisque l'écart n'est que de 2% environ.

TABLEAU 2: Comparaison entre les pressions expérimentales du $n$-$C_{24}$ obtenues avec l'appareil à saturation et les valeurs calculées par l'équation de Cox

| $T°_1C$ | $P_{exp}$ (Pa) | 100* $(P_{exp}-P_{Cox})/P_{exp}$ |
|---|---|---|
| 120,00 | 1,725 | - 1,20 |
| 100,46 | 0,316 | - 2,30 |
| 60,92 | 0,0446 | - 1,20 |

On peut ainsi considérer que l'on dispose de données sûres sur les tensions de vapeur du $n$-$C_{24}$ jusqu'à $4.10^{-2}$ Pa. Ce composé peut donc servir d'étalon pour de nouvelles études.

Le $n$-$C_{24}$ a ainsi permis de déterminer la tension de vapeur d'autres composés tels que le $n$-$C_{28}$. Pour ce composé, on dispose également de toutes les grandeurs thermodynamiques permettant l'extrapolation par la même méthode, au moyen de l'équation de Cox, des mesures effectuées jusqu'à 1 Pa au moyen de l'appareil statique disponible au laboratoire. Le TABLEAU 3 ci-après montre que l'écart moyen est de 4,64 % jusqu'à des pressions de $10^{-4}$ Pa.

TABLEAU 3 : Comparaison des pressions expérimentales du $n$-$C_{28}$ mesurées avec l'appareil à saturation et les valeurs calculées par l'équation de Cox.

| $T°_1C$ | $P_{exp}$ (Pa) | 100* $(P_{exp}-P_{Cox})/P_{exp}$ |
|---|---|---|
| 60,92 | $1,74 \cdot 10^{-4}$ | - 8,33 |
| 80,57 | $2,28 \cdot 10^{-3}$ | - 4,96 |

(suite)

| T°$_1$C | P$_{exp}$ (Pa) | 100* (P$_{exp}$-P$_{Cox}$)/P$_{exp}$ |
|---|---|---|
| 80,57 | 2,32 10$^{-3}$ | - 2,86 |
| 100,47 | 2,14 10$^{-2}$ | - 4,08 |
| 100,47 | 2,09 10$^{-2}$ | - 6,23 |
| 119,98 | 0,145 | - 3,80 |
| 139,71 | 0,806 | - 1,55 |
| 149,57 | 1,866 | 5,31 |
| 149,57 | 1,852 | 4,57 |

Un quatrième exemple de mesure a été réalisé sur un mélange binaire A+B, en prenant le *n*-C$_{14}$ comme étalon, et a pour but de montrer que l'appareil selon l'invention permet l'étude des mélanges.

Les conditions d'analyse sont les suivantes.

Température du saturateur : 90° C.
Débit du gaz de saturation du mélange binaire : D$_1$ = 2 ml/min
Débit du gaz de saturation du *n*-C$_{14}$ : D$_2$ = 2 ml/min
Temps de piégeage = 10 minutes
Programmation du four d'analyse : 40°C jusqu'à 200° C avec une pente de 15° C/min
Pression de vapeur de *n*-C$_{14}$: 260 Pa

La pression de vapeur saturante partielle du composé A obtenue est 522 Pa et celle du composé B de 68 Pa. La pression de vapeur du mélange est donc de 522+68 = 590 Pa.

L'invention n'est pas limitée aux exemples décrits et représentés car diverses modifications peuvent y être apportées sans sortir de son cadre.

**Revendications**

1. Appareillage **(I)** pour mesurer la pression de vapeur **P$_1$$^0$** d'un composé **(1)** à une température donnée **T$_1$** comprenant :

   • un premier circuit **(4)** assurant la circulation d'un gaz inerte dans un sens donné entre une entrée et une sortie et muni de moyens **(7)** de mesure du débit **(D$_1$)** du gaz inerte et de moyens **(8)** de saturation, à la température **T$_1$**, du gaz inerte en composé **(1)** dont la pression de vapeur **P$_1$$^0$** est à mesurer,
   • un deuxième circuit **(5)** assurant la circulation du gaz inerte dans un sens donné entre une entrée et une sortie et muni de moyens **(7)** de mesure du débit **(D$_2$)** du gaz inerte et de moyens **(8)** de saturation, à une température **T$_2$**, du gaz inerte en un étalon **(2)** de pression de vapeur **P$_2$$^0$** à la température **T$_2$**,
   • une canalisation surchauffée **(12)**, sur laquelle les deux circuits **(4 et 5)** se rejoignent à leur sortie, et qui assure le transport du gaz inerte saturé à la fois en composé **(1)** et en étalon **(2)** vers une colonne **(13)** pour chromatographie en phase gazeuse,
   • des moyens **(14)** pour modifier la température de ladite colonne chromatographique **(13)** pour que cette dernière assure tout d'abord le piégeage du composé **(1)** et de l'étalon **(2)** puis leur libération vers des moyens **(15)** assurant leur détection de manière quantitative.

2. Appareillage selon la revendication 1, **caractérisé en ce que** les moyens **(8)** de saturation du gaz inerte en composé **(1)** et les moyens **(8)** de saturation en étalon **(2)** sont à la même température **T$_1$**.

3. Appareillage selon la revendication 1 ou 2, **caractérisé en ce que** le débit du gaz inerte dans le premier circuit est égal au débit du gaz inerte dans le second circuit.

4. Appareillage selon l'une des revendications 1 à 3, **caractérisé en ce que** les moyens, assurant la détection **(15)** du composé **(1)** et de l'étalon **(2)** de manière quantitative, sont constitués d'un détecteur à ionisation de flamme **(FID).**

5. Appareillage selon l'une des revendications 1 à 3, **caractérisé en ce que** le premier **(4)** et le second **(5)** circuit sont munis, après les moyens **(8)** de saturation, de moyens **(9)** de décantation du gaz inerte saturé.

**6.** Appareillage selon l'une des revendications 1 à 4, **caractérisé en ce que** les moyens **(8)** de saturation du gaz inerte en composé **(1)** et ceux en étalon **(2)** sont des colonnes capillaires ou remplies pour chromatographie en phase gazeuse.

**7.** Appareillage selon l'une des revendications 1 à 6, **caractérisé en ce que** la canalisation surchauffée **(12)** est en silice non modifiée.

**8.** Procédé pour mesurer la pression de vapeur $P_1^0$ d'un composé **(1)** à une température $T_1$, comprenant les étapes suivantes :

a) faire circuler un gaz inerte, avec un débit $D_1$ et à la température $T_1$, au travers de moyens **(8)** de saturation en composé **(1)** dont la pression de vapeur $P_1^0$ est à mesurer, ces moyens de saturation étant maintenus à la température $T_1$ ;

b) en parallèle, faire circuler le gaz inerte avec un débit $D_2$ au travers de moyens **(8)** de saturation en un étalon **(2)** dont la pression de vapeur $P_2^0$ à une température $T_2$ est connue, ces moyens de saturation étant maintenus à la température $T_2$ ;

c) réunir le gaz inerte obtenu à l'étape a) qui est saturé en composé **(1)** à la température $T_2$, et le gaz inerte obtenu à l'étape b) qui est saturé en étalon **(2)** ;

d) piéger dans une colonne chromatographique **(13)**, pendant un temps de piégeage **t**, le gaz inerte obtenu à l'étape c) qui est saturé en composé **(1)** et en étalon **(2)**, le volume de composé **(1)** piégé étant égal au produit du temps **t** de piégeage par le débit $D_1$ et le volume d'étalon **(2)** piégé étant égal au produit du temps **t** de piégeage par le débit $D_2$ ;

e) élever la température de la colonne chromatographique **(13)** pour libérer le composé **(1)** et l'étalon **(2)** piégés à l'étape d) vers un détecteur **(15)** assurant leur analyse quantitative et ainsi déterminer la masse $m_1$ de composé **(1)** piégée et la masse $m_2$ d'étalon **(2)** piégée ;

f) calculer la pression de vapeur $P_1^0$ à la température $T_1$ du composé **(1)** à partir notamment des valeurs de $P_2^0$, $m_1$, $m_2$, $D_1$ et $D_2$.

**9.** Procédé selon la revendication 8, **caractérisé en ce que** $T_1 = T_2$ et **en ce qu'**à l'étape f) la pression $P_1^0$ est calculée à partir de l'équation **(III)** suivante :

$$P_1^0 = P_2^0 \; \frac{m_1 \, M_2 \, D_2}{m_2 \, M_1 \, D_1} \; \exp\left[\frac{V_{L2} - V_{L1}}{RT_1} P\right] \textbf{(III)}$$

dans laquelle :

- $M_1$ = masse molaire du composé **(1)**,
- $M_2$ = masse molaire de l'étalon **(2)**,
- $V_{L1}$ = volume molaire du composé **(1)**,
- $V_{L2}$ = volume molaire de l'étalon **(2)**,
- R = constante des gaz parfaits,
- P = pression du gaz inerte.

**10.** Procédé selon la revendication 8, **caractérisé en ce que** $T_1 = T_2$ et **en ce qu'**à l'étape f), la pression $P_1^0$ est calculée à partir de l'équation **(IV)** suivante :

$$P_1^0 = P_2^0 \; \frac{m_1 M_2 \, D_2}{m_2 M_1 \, D_1} \quad \textbf{(IV)}$$

dans laquelle $M_1$ et $M_2$ sont tels que définis pour **(III)**.

**Claims**

1. Apparatus (I) for measuring the vapor pressure $P_1^0$ of a compound (1) at a given temperature $T_1$, the apparatus comprising:

   · a first circuit (4) for providing a flow of an inert gas in a given direction between an inlet and an outlet and provided with means (7) for measuring the flow rate ($D_1$) of the inert gas and saturator means (8) for saturating, at the temperature $T_1$, the inert gas with the compound (1) of vapor pressure $P_1^0$ that is to be measured;
   · a second circuit (5) for providing a flow of inert gas in a given direction between an inlet and an outlet and provided with means (7) for measuring the flow rate ($D_2$) of the inert gas and saturator means (8) for saturating, at a temperature $T_2$, the inert gas with a reference standard (2) of vapor pressure $P_2^0$ at the temperature $T_2$ ;
   · a superheated pipe (12) where the two circuits (4 and 5) meet at their outlets, which pipe conveys the inert gas saturated both in the compound (1) and in the reference standard (2) towards a gas phase chromatography column (13); and
   · means (14) for modifying the temperature of said chromatography column (13) so that it initially traps the compound (1) and the reference standard (2), and subsequently releases them to means (15) for detecting them in quantitative manner.

2. Apparatus according to claim 1, **characterized in that** the means (8) for saturating the inert gas with the compound (1) and the saturator means (8) for saturating it with the reference standard (2) are at the same temperature $T_1$.

3. Apparatus according to claim 1 or claim 2, **characterized in that** the flow rate of the inert gas in the first circuit is equal to the flow rate of the inert gas in the second circuit.

4. Apparatus according to any one of claims 1 to 3, **characterized in that** the means (15) for detecting the compound (1) and the reference standard (2) in quantitative manner are constituted by a flame ionization detector (FID).

5. Apparatus according to any one of claims 1 to 3, **characterized in that**, after the saturator means (8), the first and second circuits (4, 5) are provided with settler means (9) for settling the saturated inert gas.

6. Apparatus according to any one of claims 1 to 4, **characterized in that** the saturator means (8) for saturating the inert gas with the compound (1) and those for saturating it with the reference standard (2) are capillary or filled columns for gas phase chromatography.

7. Apparatus according to any one of claims 1 to 6, **characterized in that** the superheated pipe (12) is made of non-modified silica.

8. A method of measuring the vapor pressure $P_1^0$ of a compound (1) at a temperature $T_1$, the method comprising the following steps:

   a) causing an inert gas to flow at a rate $D_1$ and at a temperature $T_1$ through saturator means (8) for saturating it in the compound (1) of vapor pressure $P_1^0$ that is to be measured, said saturator means being maintained at a temperature $T_1$;
   b) in parallel, causing the inert gas to flow at a rate $D_2$ through saturator means (8) for saturating it in a reference standard (2) of vapor pressure $P_2^0$ at a temperature $T_2$ that is known, said saturator means being maintained at the temperature $T_2$;
   c) combining the inert gas obtained in step a), which is saturated in the compound (1) at the temperature $T_2$, with the inert gas obtained in step b), which is saturated with the reference standard (2);
   d) during a trapping time t, using a chromatography column (13) to trap the inert gas obtained in step c), which is saturated in the compound (1) and in the reference standard (2), the volume of trapped compound (1) being equal to the product of the trapping time t multiplied by the flow rate $D_1$, and the volume of trapped reference standard (2) being equal to the product of the trapping time t multiplied by the flow rate $D_2$;
   e) raising the temperature of the chromatography column (13) to release the compound (1) and the reference standard (2) as trapped in step d) towards a detector (15) enabling them to be analyzed in quantitative manner, and thus determining the mass $m_1$ of the trapped compound (1) and the mass $m_2$ of the trapped reference standard (2);
   f) calculating the vapor pressure $P_1^0$ at temperature $T_1$ of the compound (1) on the basis in particular of the values of $P_2^0$, $m_1$, $m_2$, $D_1$, and $D_2$.

9. A method according to claim 8, **characterized in that** $T_1=T_2$. and **in that** in step f), the pressure $P_1^0$ is calculated from equation (III) below:

$$P_1^0 = P_2^0 \; \frac{m_1 \; M_2 \; D_2}{m_2 \; M_1 \; D_1} \exp\left[\frac{V_{L2} - V_{L1}}{RT_1} P\right] \qquad \text{(III)}$$

in which:

- $M_1$ = molar mass of the compound (1);
- $M_2$ = molar mass of the reference standard (2);
- $V_{L1}$ = molar volume of the compound (1);
- $V_{L2}$ = molar volume of the reference standard (2);
- R = perfect gas constant; and
- P = pressure of the inert gas.

10. A method according to claim 8, **characterized in that** $T_1=T_2$, and **in that** in step f), the pressure $P_1^0$ is calculated from equation (IV) below:

$$P_1^0 = P_2^0 \; \frac{m_1 \, M_2 \; D_2}{m_2 \, M_1 \; D_1} \qquad \text{(IV)}$$

where $M_1$ and $M_2$ are as defined for (III).

**Patentansprüche**

1. Apparatur (I) zum Messen des Dampfdrucks $P_1^0$ einer Probe (1) bei einer gegebenen Temperatur $T_1$, umfassend:

- einen ersten Kreis (4), welcher das Strömen eines Inertgases in einer gegebenen Richtung zwischen einem Eingang und einem Ausgang sicherstellt und welcher mit Mitteln (7) zum Messen des Durchflusses ($D_1$) des Inertgases und mit Mitteln (8) zum Sättigen, bei der Temperatur $T_1$, des Inertgases mit der Probe (1), deren Dampfdruck $P_1^0$ zu messen ist, versehen ist,
- einen zweiten Kreis (5), welcher das Strömen des Inertgases in einer gegebenen Richtung zwischen einem Eingang und einem Ausgang sicherstellt und welcher mit Mitteln (7) zum Messen des Durchflusses ($D_2$) des Inertgases und mit Mitteln (8) zum Sättigen, bei einer Temperatur $T_2$, des Inertgases mit einem Standard (2) mit einem Dampfdruck $P_2^0$ bei der Temperatur $T_2$ versehen ist,
- eine beheizte Leitung (12), an welcher die zwei Kreise (4 und 5) am Ausgang derselben zusammentreffen und welche das gleichzeitige Transportieren des Inertgases, das mit der Probe (1) gesättigt ist, und des Inertgases, das mit dem Standard (2) gesättigt ist, hin zu einer Säule (13) zur Gaschromatographie sicherstellt,
- Mittel (14) zum Ändern der Temperatur der chromatographischen Säule (13), derart, daß letztere zuerst das Einfangen der Probe (1) und des Standards (2) sicherstellen, und danach das Freisetzen derselben hin zu Mitteln (15), welche das quantitative Erfassen derselben sicherstellen.

2. Apparatur nach Anspruch 1, **dadurch gekennzeichnet, daß** die Mittel (8) zum Sättigen des Inertgases mit der Probe (1) und die Mittel (8) zum Sättigen mit dem Standard (2) sich auf derselben Temperatur $T_1$ befinden.

3. Apparatur nach Anspruch 1 oder 2, **dadurch gekennzeichnet, daß** der Durchfluß des Inertgases in dem ersten Kreis gleich dem Durchfluß des Inertgases in dem zweiten Kreis ist.

4. Apparatur nach einem der Ansprüche 1 bis 3, **dadurch gekennzeichnet, daß** die Mittel (15), welche das quantitative Erfassen der Probe (1) und des Standards (2) sicherstellen, von einem Flammenionisationsdetektor (FID) gebildet werden.

5. Apparatur nach einem der Ansprüche 1 bis 3, **dadurch gekennzeichnet, daß** der erste (4) und der zweite (5) Kreis

13

nach den Mitteln (8) zum Sättigen mit Mitteln (9) zum Dekantieren des gesättigten Inertgases versehen sind.

6. Apparatur nach einem der Ansprüche 1 bis 4, **dadurch gekennzeichnet, daß** die Mittel (8) zum Sättigen des Inertgases mit der Probe (1) und jene (2) zum Sättigen mit dem Standard Kapillarsäulen oder gepackte Säulen für die Gaschromatographie sind.

7. Apparatur nach einem der Ansprüche 1 bis 6, **dadurch gekennzeichnet, daß** die beheizte Leitung (12) aus unmodifiziertem Siliciumdioxid besteht.

8. Verfahren zum Messen des Dampfdrucks $P_1^0$ einer Probe (1) bei einer Temperatur $T_1$, umfassend die folgenden Schritte:

   a) Strömenlassen eines Inertgases mit einem Durchfluß $D_1$ und bei der Temperatur $T_1$ durch Mittel (8) zum Sättigen mit der Probe (1), deren Dampfdruck $P_1^0$ zu messen ist, wobei die Mittel zum Sättigen auf der Temperatur $T_1$ gehalten werden,
   b) parallel dazu Strömenlassen des Inertgases mit einem Durchfluß $D_2$ durch Mittel (8) zum Sättigen mit einem Standard (2), dessen Dampfdruck $P_2^0$ bei einer Temperatur $T_2$ bekannt ist, wobei die Mittel zum Sättigen auf der Temperatur $T_2$ gehalten werden,
   c) Zusammenführen des in Schritt a) erhaltenen Inertgases, welches mit der Probe (1) bei der Temperatur $T_2$ gesättigt ist, und des in Schritt b) erhaltenen Inertgases, welches mit dem Standard (2) gesättigt ist,
   d) Einfangen in einer chromatographischen Säule (13) während einer Einfangzeit t des in Schritt c) erhaltenen Inertgases, welches mit der Probe (1) und dem Standard (2) gesättigt ist, wobei das eingefangene Volumen der Probe (1) gleich ist dem Produkt aus der Einfangzeit t und dem Durchfluß $D_1$, und das eingefangene Volumen des Standards (2) gleich ist dem Produkt aus der Einfangzeit t und dem Durchfluß $D_2$,
   e) Erhöhen der Temperatur der chromatographischen Säule (13) zum Freisetzen der Probe (1) und des Standards (2), welche in Schritt d) eingefangene worden sind, hin zu einem Detektor (15), welcher die quantitative Analyse derselben sicherstellt, und Bestimmen der eingefangenen Masse $m_1$ der Probe (1) und der eingefangenen Masse $m_2$ des Standards (2) auf diese Weise,
   f) Berechnen des Dampfdrucks $P_1^0$ bei der Temperatur $T_1$ der Probe (1), und zwar ausgehend von den Werten $P_2^0$, $m_1$, $m_2$, $D_1$ und $D_2$.

9. Verfahren nach Anspruch 8, **dadurch gekennzeichnet, daß** $T_1 = T_2$, und **dadurch**, daß in Schritt f) der Druck $P_1^0$ ausgehend von der folgenden Gleichung (III) berechnet wird:

$$P_1{}^0 = P_2{}^0 \ \frac{m_1 M_2 D_2}{m_2 M_1 D_1} \ \exp\left[\frac{V_{L2} - V_{L1}}{RT_1} P\right] \ \text{(III)}$$

wobei:

   • $M_1$ = Molmasse der Probe (1),
   • $M_2$ = Molmasse des Standards (2),
   • $V_{L1}$ = Molvolumen der Probe (1),
   • $V_{L2}$ = Molvolumen des Standards (2),
   • R = Konstante des idealen Gases,
   • P = Druck des Inertgases.

10. Verfahren nach Anspruch 8, **dadurch gekennzeichnet, daß** $T_1 = T_2$, und **dadurch**, daß in Schritt f) der Druck $P_1^0$ ausgehend von der folgenden Gleichung (IV) berechnet wird:

$$P_1{}^0 = P_2{}^0 \ \frac{m_1 M_2 D_2}{m_2 M_1 D_1} \ \text{(IV)}$$

wobei $M_1$ und $M_2$ gleich definiert sind wie für (III).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.L.Hales et al.** *J.Chem.Thermodynamics,* 1981, vol. 13, 591-601
- **C. VITON ; M. CHAVRET ; E. BEHAR ; J. JOSE.** Vapor pressures of normal alkanes from decane to eicosane. *Eldata : Int. Electron. J. Phys-Chem. Data,* 1996, vol. 2, 150-161
- **MACKNICK A.B. ; PRAUSNITZ J.M.** Vapor pressures of high-molecular-weight hydrocarbons. *Journal of Chemical Engineering Data,* 1979, vol. 24 (3), 175-178

- **C. VITON ; M. CHAVRET ; E. BEHARD ; J. JOSE.** Vapor pressures of normal alkanes from decane to eicosane. *Eldata : Int. Electron. J. Phys-Chem. Data,* 1996, vol. 2, 150-16
- **T. GUETACHEW ; J. JOSE ; E. RAUZY ; I. MOKBEL.** Prediction of vapor pressures of alkanes from C20 to C30 through a group contribution equation of state. *The sixteenth thermodynamics conférence : Thermodynamics and statistical, Mechanics with industrial application,* 14 Avril 1999
- **King ; Al-Najjar.** *Chem. Eng. Sci.,* 1974, vol. 29, 1003-1011